# EUROPEAN PATENT APPLICATION

(11) **EP 1 333 354 A2**
(43) Date of publication of application: **06.08.2003**
(21) Application number: 03000078.0
(22) Date of filing: 08.01.2003
(51) Int. Cl.: G06F 1/00

(54) **Method of marking a program for identification/authentication**

(30) Priority: 01.02.2002 US 61809
(71) Applicant: MATSUSHITA ELECTRIC INDUSTRIAL CO., LTD., Kadoma-shi, Osaka 571-8501 (JP)
(72) Inventor: Perkins, Gregory Michael, Pennington, NJ 08534 (US)
(74) Representative: Schwabe - Sandmair - Marx

(57) **Abstract**

The disclosure is directed to a method of marking for authentication a computer program with a bit-string pattern. The method includes generating a bit-string pattern, each bit in the bit-string pattern having a binary value and at least one bit having a first value. The computer program is searched for at least one polymorphic statement. The one bit having the first value is associated with the polymorphic statement found by the search. The polymorphic statement is then altered, thereby marking the computer program.

## Description

### FIELD OF THE INVENTION

This invention relates, in general, to a method for marking and identifying a program. More specifically, this invention relates to a method for embedding a bit-string into a program and later identifying the bit-string to authenticate the program.

### BACKGROUND OF THE INVENTION

A high level language, or an application program, is a program written in a form with which a user of a computing system is familiar, rather than in machine language. The application program includes a coded instruction stream which may be considered to be a plurality of serially executed (straight line code) source statements, selected source statements including one or more operands in the form of symbolic addresses, and other selected source statements requiring conditional or unconditional branching to yet another source statement identified by a label (basic blocks of code being straight line code bounded by branches and identified by labels)

In basic terminology, a program written in a higher level language is called the source program. A source program may usually be translated into an object program. The object program may usually exist in many forms, depending on the particular system involved. It may exist in pure binary form, or it may actually exist in a fairly complex symbolic assembly language form. The phrase object program, strictly speaking, relates only to the final binary form that is executed by the computer, but in common conversation, it is often used to denote the result of translating the source program at least down to an assembly level.

A compiler interprets the source statements and produces object code. The object code is directly executable by the computing system, and generally includes more than one object (machine language) instruction for each source statement. The compiler translates a source program written in a particular programming language to an object program which is capable of being run on a particular computer. A compiler is, therefore, both language and machine dependent.

One function of the compiler is to allocate or assign quantities referenced in the source statement operands to specific machine registers. Register allocation is an important task of the compiler. This is because operations that use operands in registers and return results to registers can proceed at a much higher speed that those which require memory or storage accessing.

A program, whether in a high level language or an assembly language, is typically lengthy and contains many statements. Once tested, verified and released, it is difficult to determine whether the program has been modified by another programmer. An unauthorized user having access to the program may delete or modify statements in the program, without anyone else being aware of the tampering. It generally takes many man-hours of troubleshooting time to determine whether a released program has been modified.

A need still exist for a method to determine whether a program has been modified, without requiring many man-hours of troubleshooting time. This invention addresses this need.

### SUMMARY OF THE INVENTION

To meet this and other needs, and in view of its purposes, the present invention provides a method for marking and then later authenticating, a computer program via a bit-string pattern. The method includes generating a bit-string pattern, each bit in the bit-string pattern having a binary value and at least one bit having a first value. The computer program is searched for at least one polymorphic statement (i.e. a statement that may have more than one form, each form producing the same effect in the program). The one bit having the first value is associated with the polymorphic statement found by the search. The polymorphic statement is then altered, thereby marking the computer program.

The bit-string pattern is generated by modifying selected bit positions of a default bit-string pattern, in which each bit in the default bit-string pattern has a second value. The second value may be a zero and the first value may be a one.

In an embodiment of the invention, the method includes providing a pointer for locating a statement in the computer program, and searching for a polymorphic statement based on the statement located by the pointer.

In another embodiment of the invention, the method marks a computer program by performing the following steps:
a) associating a bit-string pattern having a plurality of values with a plurality of predetermined computer statements, in which each predetermined computer statement is expressible as first and second equivalent operations;
b) selecting a first non-processed value of the bit-string pattern;
c) searching the computer program for at least one predetermined computer statement corresponding to the first non-processed value of the bit-string pattern;
d) expressing the predetermined computer statement found in step (c) as one of the first and second equivalent operations;
e) marking the first non-processed value of the bit-string pattern as processed; and
f) repeating steps (b) through (e) for each non-processed value of the bit-string pattern.

In still another embodiment of the invention, the method authenticates a second computer program against a first computer program by performing the following steps:
a) accessing a bit-string pattern, each bit in the bit-string pattern having a binary value and at least one bit having a first value;
b) searching for at least one polymorphic statement in the second computer program;
c) associating the one bit having the first value with the polymorphic statement found in step (b);
d) altering the polymorphic statement in the second computer program;
e) comparing the polymorphic statement in the second computer program, after altering the polymorphic statement in step (d), against a corresponding polymorphic statement in the first computer program; and
f) determining that the second computer program is a modified version of the first computer program, if the polymorphic statements compared in step (e) are not similar.

It is understood that the foregoing general description and the following detailed description are exemplary, but are not restrictive, of the invention.

### BRIEF DESCRIPTION OF THE DRAWING

The invention is best understood from the following detailed description when read in connection with the accompanying drawing. Included in the drawing are the following figures:

Figure 1 is a flow-chart diagram that illustrates steps for marking a program with a bit-string pattern in accordance with an embodiment of the invention; and

Figure 2 is a flow-chart diagram that illustrates steps for authenticating a program which has been marked in accordance with the embodiment of the invention shown in Figure 1.

### DETAILED DESCRIPTION OF THE INVENTION

In an exemplary embodiment of the invention a bit-string is embedded into a program. The bit-string marks or provides a signature for the program, so that the program may be identified and authenticated at a later time. There are several methods for marking and later authenticating the program, depending on the programming language.

For example, in C/C + + programming language, a method for marking the program may be to mark the inline assembly code. As a standard feature of most C/C+ + compilers, inline assembly code allows a programmer or user to define which registers to use in an operation. By modifying the registers used in the inline assembly code, the program may be marked.

By way of example, Table 1 lists the inline assembly code present in an original, unmarked program. The instruction "mov eax, a" fetches the parameter at address "a" from memory and moves it into register eax. The instruction "mov ebx, b" fetches the parameter at address "b" from memory and moves it into register ebx. The instruction "add eax, ebx" adds the contents of register ebx to register eax. The instruction "mul ebx, eax" multiplies the contents of register eax with the contents of register ebx and stores the product in register ebx.

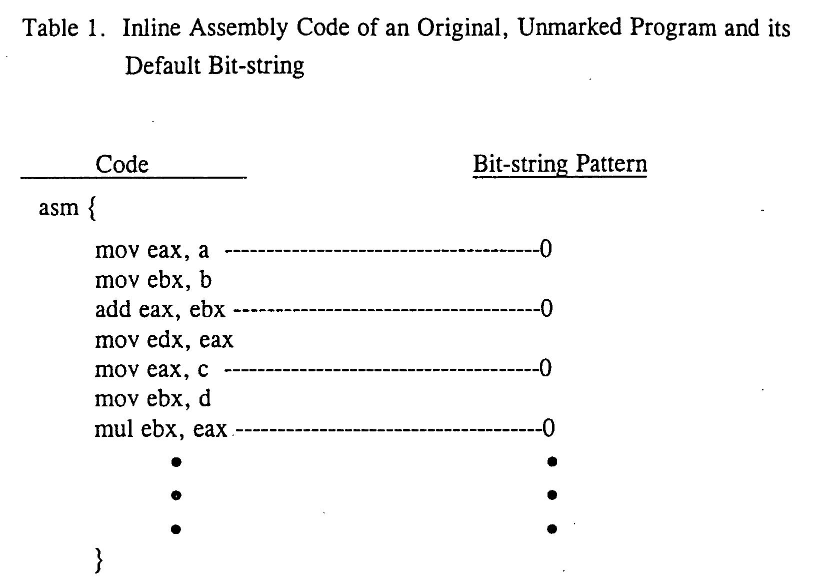

During program compilation, a compiler often has a choice as to which register it will use for an operation. Without loss of generality, the compiler may freely choose to use the eax or ebx register for the operation. Typically, the compiler may simply load "a" into register eax and "b" into register ebx to setup the command "add eax, ebx" which adds "a" and "b". The compiler may just as easily load "a" into register ebx and "b" into register eax and then add "a" and "b", as before.

Because the programmer has a choice, he may define the operations of loading "a" into register eax and loading "b" into register ebx as "0". The operations of loading "a" into register ebx and loading "b" into register eax, on the other hand, may be defined as "1". If there is a string of length "k" addition operations in the inline assembly code, the programmer may define a bit-string of length "k" in the program. Of course, addition is not the only operation that the programmer may use. Every operation, in which there is a choice as to which register to load, may be used by the programmer.

In addition, the programmer may swap instructions, for example, the following instructions:
jnz (memory address value 0)
jump (memory address value 1)
may be switched with the following instructions:
jz (memory address value 1)
jump (memory address value 0)
It will be appreciated that "jz" is defined as "jump if result is zero" and "jnz" is defined as "jump if result is not equal to zero".

Returning now to Table 1, the operations of "mov eax, a" and "mov ebx, b" may be defined by default as "0", while the equivalent operation "mov eax, b" and "mov ebx, a" may be defined as "1". The operation of "add eax, ebx" may be defined by default as "0", while the equivalent operation "add ebx, eax" may be defined as "1", and so on. A default bit-string of all zeros may thus be associated with the inline assembly code, shown in Table 1, for example " 0 0 0 0...".

The programmer may now define a bit-string, generally designated as β, that when processed together with the original, unmarked program produces a second inline assembly code that contains bit-string β. As will be explained, based upon bit-string β, the method of the invention produces a second inline assembly code that contains the appropriate register or operation ordering that corresponds to bit-string β. The method swaps registers and then propagates the change through the rest of the inline assembly, as required.

By way of example, Table 2 lists the second inline assembly code produced by swapping registers or operation ordering to mark the program with bit-string pattern β. In the example shown in Table 2, the bit-string pattern β is "1 1 1 1 ...". The bit-string pattern β may, of course, be any bit sequence desired by the programmer.

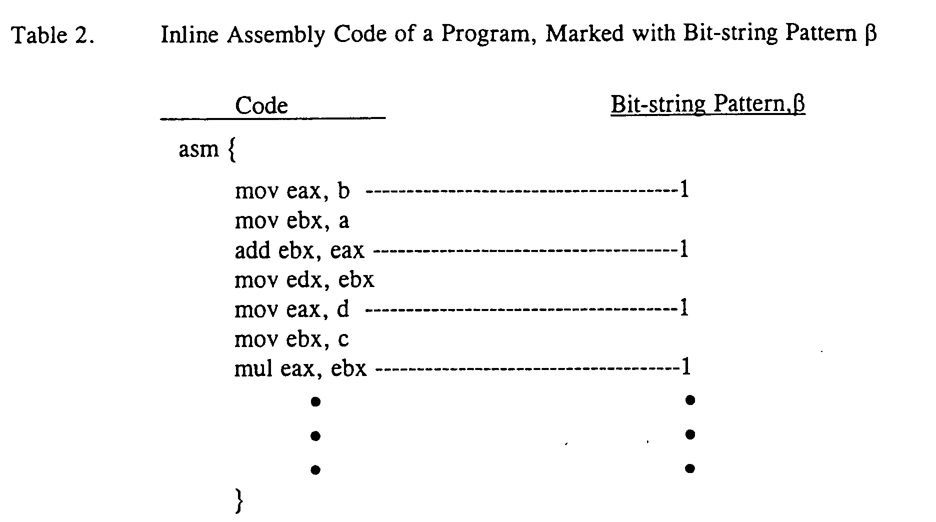

Referring now to Table 2, because the first bit in bit-string pattern β is "1", the first two statements have their registers swapped, as compared to the first two statements shown in Table 1. Whereas the first two statements of the code in Table 1 loads "b" in register ebx and "a" in register eax, the first two statements of the code in Table 2 loads "b" in register eax and "a" in register ebx.

Advancing to the next bit of bit-string pattern β, the next bit is "1". As a result, the registers are swapped with the statement "add ebx, eax". Whereas the third statement of the code, shown in Table 1, adds the contents of register ebx to register eax, the corresponding third statement of the code, shown in Table 2, adds the contents of register eax to register ebx.

It will be appreciated that the next statement of Table 1 "mov edx, eax" is not a polymorphic statement because its alternate form, "mov edx, eax" is dictated by the previous operation. Indeed, the statement "mov edx, eax" is combined with the prior statement "add eax, ebx". If the prior statement is changed to "add ebx, eax" then the statement "mov edx, eax" must change to "mov edx, ebx" for the program to achieve the same result: the storage of the result of the addition operation into register edx.

It will further be appreciated that, whether a statement or group of statements is polymorphic may depend on their context. For example, the sequence "mov eax, a; mov ebx, b; add eax, ebx" includes two polymorphic statements, while the sequence "mov eax, a; mov ebx, b; div eax, ebx" forms a single polymorphic statement.

Advancing through each bit of bit-string pattern β, if the bit is "0", the next polymorphic statement in the code is not altered. If the bit is "1", however, the next polymorphic statement in the code is altered. This method is continued until all the bits have been considered. In the exemplary embodiment of Table 2, the first four bits are "1 1 1 1", consequently the first four polymorphic statements of Table 1, are altered into the first four polymorphic statements of Table 2. In this manner, the method marks portions of the code to contain bit-string pattern β.

It will be appreciated that some portions of the code should not be marked. Which portions of the code to mark is a security level decision. For the safest approach the method may mark dummy code, that is, code not accessed during execution of the program. Marking only dummy code ensures that the method does not add bugs to the marked program. Of course, dummy code may be easily recognized and removed, for example, by conventional code optimization processes. As one option, the method may mark critical or semi-critical portions of the code to add an extra safeguard against tampering with the identification mark. This option may also help hide that the program is marked.

Having selected bit-string pattern β, the method may also select a location in the program to begin marking a statement. As one option, the method may mark executable code with a series of commands or statements that typically do not occur in a binary executable program. For example, at the start, or some other location of the inline assembly code, the method may insert program code, such as that shown in Table 3. Three such statements typically do not occur in any executable code, unless forced to occur. Once the start of the string marker is in place, the method may search the program for the beginning of bit-string pattern β. As another option, an end of string marker may also be added to the program to identify the end of bit-string pattern β.

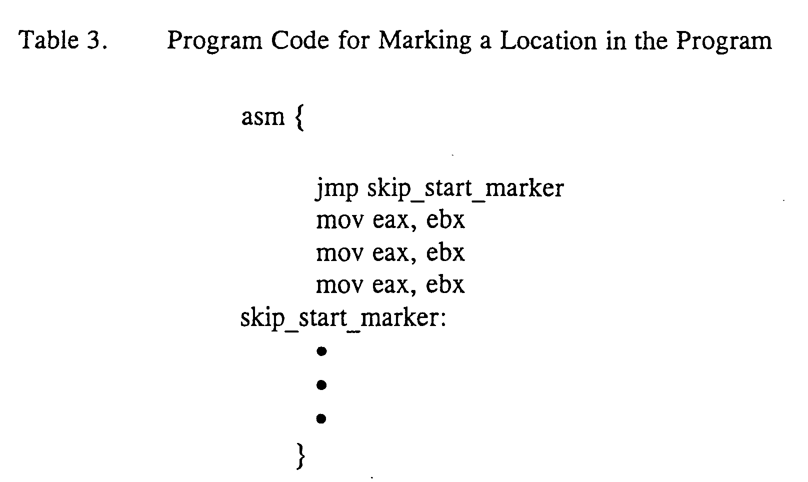

Another option is for the method to mark the binary executable program by selecting an appropriate location for the start of bit-string pattern β (critical, semi-critical or dummy code). The value of the location may be stored with the program code file for future use in authenticating the file. Because the program will not change once marked, this option provides an easy approach for locating the start of bit-string pattern β in the program.

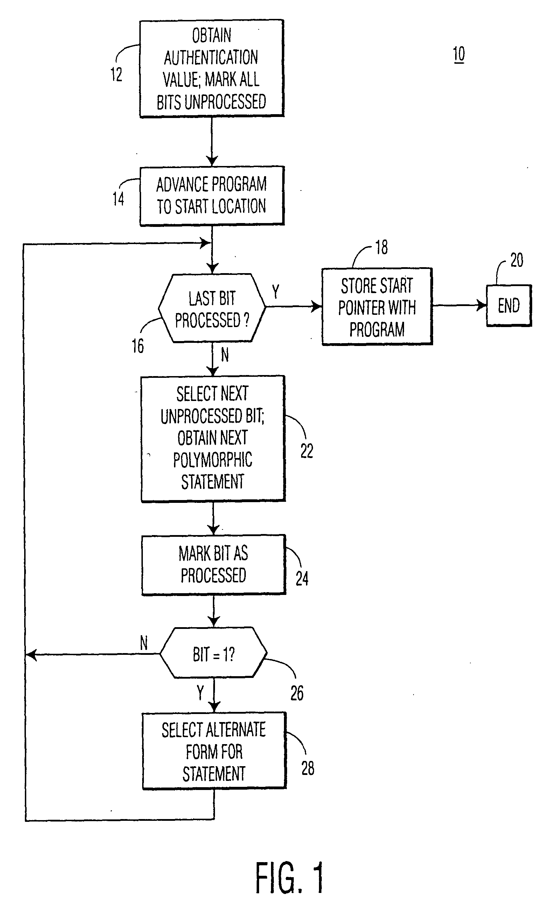

Referring to Figure 1, this is shown a method, designated as 10, for marking a program. In the exemplary embodiment of the invention, the program is inline assembly code, such as that shown in Tables 1, 2 and 3, executed on a platform, such as a Pentium personal computer (PC). Inline assembly code is a standard feature of C/C + + programming language and allows a programmer to define which register or registers to use in an operation. As will be explained, method 10 marks the program by creating a separate program that includes a modified version of the inline assembly code of the original program.

At step 12 of method 10, an authentication value, such as bit-string pattern β, is selected by a programmer. It will be appreciated that bit-string pattern β may be any sequence of binary bits and may be of any reasonable length. The length, of course, is desirably no longer than the number of polymorphic statements in the original inline assembly code that is to be marked. For example, bit-string pattern β may be as shown in Table 2 (1 1 1 1 ...) or may be 1 0 0 1 1 0 1 ... 1 0 1. The bit-string sequence may be based on a random or pseudo-random process, or any other process selected by the programmer. After formatting the bit-string pattern, step 12 obtains the bit-string pattern for marking the program. Since all statements in the program are not yet marked, the bits in the bit-string pattern are marked "unprocessed".

Step 14 advances the program to the start location, which may be, for example, the first statement in the original program. The method then enters decision box 16. If the last bit of bit-string β has not been processed, the method continues to step 22 and selects the next unprocessed bit, which may be of value "0" or "1". Concurrently with the selection of the next unprocessed bit, the method sequences through the original program to obtain the next polymorphic statement in the sequence. As described, a polymorphic statement is a statement in the program which may be modified with an alternate statement. For example, "add eax, ebx" may be modified to be "add ebx, eax".

Having matched an unprocessed bit with a polymorphic statement in step 22, the unprocessed bit is now marked "processed" in step 24. Decision box 26 is entered next. If the bit marked as processed has a value of "0", the method does not modify the polymorphic statement, and loops back to decision box 16 to consider the next bit of bit-string pattern β.

If, however, the bit marked as processed has a value of "1", the method branches to step 28. Step 28 then modifies the polymorphic statement by selecting an alternate form for the statement.

Method 10 continues this process until all bits in bit-string pattern β have been marked as processed. After the last bit in the sequence has been processed, decision box 16 branches to step 18 and stores the start pointer, determined at step 14, with the program. The method ends in step 20.

In the embodiment shown in Figure 1, step 22 obtains the next polymorphic statement. It will be appreciated that in another embodiment, step 22 does not necessarily obtain the next polymorphic statement, but rather may select every other polymorphic statement, every third polymorphic statement, every fourth polymorphic statement, etc. It is contemplated that which polymorphic statement is selected for register swapping and which polymorphic statement is not so selected may be decided by the programmer.

In the embodiment of Figure 1, step 18 stores the start pointer of the marked program, so that later the marked program may be authenticated using the same bit-string pattern β. The start pointer provides guidance for correlating or matching the first bit in string pattern β with the first polymorphic statement selected for marking. It will be appreciated that in another embodiment, step 18 may store an end pointer, or any other pointer which may provide correlation between each bit of bit-string pattern β and its respective polymorphic statement. Alternatively, no pointer may be stored when the authenticating process uses the same method as the marking process to identify polymorphic statements.

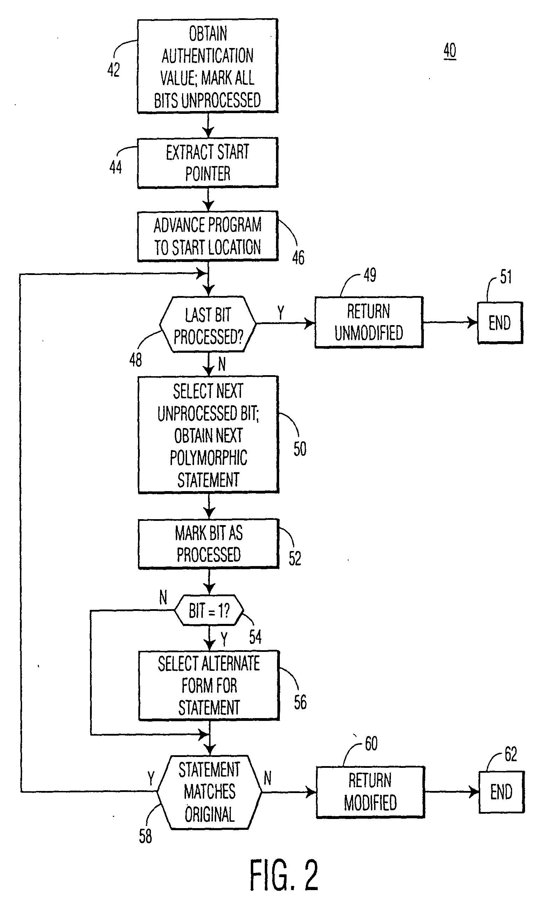

Having marked an original program by creating a second program containing altered polymorphic statements, which correspond to an authentication value of a bit-string pattern, the second program may then be authenticated using method 40 shown in Figure 2.

Referring now to Figure 2, there is shown method 40 for authenticating a marked program to determine whether the program has been modified from its original version. The authentication value is obtained in step 42 and all bits are marked unprocessed. It will be appreciated that the authentication value may be stored separately in a secure database or it may be appended to the marked program. The authentication value may be scrambled or encrypted when it is appended to the program.

Step 44 finds the first polymorphic statement which has been marked. In the embodiment shown in Figure 2, step 44 finds the first polymorphic statement, based on a pointer. Similar to the authentication value, the pointer may be scrambled or encrypted, and appended to the marked program. Alternatively, as described above, it is contemplated that this pointer may be omitted.

Based on the pointer, step 46 advances the marked program to the start location. If the last bit of the authentication value has not been processed, as determined by decision box 48, the method continues to step 50, and the next polymorphic statement is obtained. Step 52 then marks the bit as processed.

If the processed bit has a value of "0", as determined by decision box 54, the method branches to step 58, without modifying or altering the polymorphic statement. If decision box 54, on the other hand, determines that the processed bit has a value of "1", step 56 selects an alternate form for the polymorphic statement.

Decision box 58 is entered next to determine whether the resulting polymorphic statement matches the original statement. If the statements do not match, step 60 is entered to return a decision that the program has been modified. The method ends in step 62.

If decision box 58, on the other hand, determines that the statements match each other, the method loops back to decision box 48 and processes the next bit. When the last bit is processed, as determined by decision box 48, step 49 is entered to return a decision that the program has not been modified by a hacker. The method ends in step 51.

In another embodiment of the invention, a first bit-string pattern is associated with a first original program. The first bit-string pattern may be stored in a first table. When a second program is to be authenticated against the first program, a second bit-string pattern may be generated for the second program, using the same definition that created the first bit-string pattern. The second bit-string pattern may then be compared to the first bit-string pattern. If the two bit-string patterns are not identical, a conclusion may be made that the second program is an altered version of the first program.

In yet another embodiment of the invention, the method marks the original program to produce a second marked program containing bit-string pattern β. When authenticating a third program, the third program is compared, statement by statement, to the second marked program. If any statement in the third program is not identical with a corresponding statement in the second program, a conclusion may be made that the third program has been modified by a hacker.

A method of the invention will now be described by letting P be the source code of a program and E be the executable/compiled version to be marked. The default bit-string in P may be all zeros, 0 0 0 0 ... 0 0.

A separate program, S, may be created to automatically modify the inline assembly code of P. After defining bit-string pattern β, the separate program, S, may process P and β to produce P¹ = S (P, β), code that when compiled contains bit-string pattern β in E. Based upon β, S may switch registers or operations, as described above, such that E may contain the appropriate register/operation ordering that defines bit-string β.

If recompilation is not desirable after each operation S (P, β), the method may directly manipulate the binary executable E, S (E, β). In essence, the method of switching registers for inline assembly code may be the same as the method used to manipulate the binary executable E. Whereas for inline assembly code S operates on text, for binary executable E, however, S operates on binary representations of the assembly commands.

In Java programming, for example, registers cannot be reordered. Only operations may be reordered, because Java is platform independent and does not contain register information. In Java, the method of the invention may manipulate or reorder Java by code. For example, if the Java code contains, "a = b + c", then the method may reorder the command in either P or E, as "a = b + c" or "a = c + b".

Table 4 illustrates the assignment of binary values to predetermined computer statements, in which each predetermined computer statement may be expressed as at least first and second equivalent operations.

**Table 4.**

| Predetermined Computer Statements Expressable as First and Second Equivalent Operations | |
|---|---|
| | |
| 0 | C = A + B; |
| 1 | C = B + A; |
| 0 | C = A*B; |
| 1 | C = B*A; |

During identification/authentication of the program, the method may first find the start of bit-string β in E. As described before, this may be accomplished in two ways. One option may mark the executable with a series of commands that do not typically occur in any binary executable program. Another option may select an appropriate location for the start of β and then store this value for later retrieval. Since E does not change for a given marking program S, the method may locate the start of β in E.

After the executable E has been parsed and a binary string α has been removed from E, the method may extract β from α for authentication of the program. If marking program S operates on the binary executable or Java byte code, the method may apply a similar program to α. The program, however, does not modify α. Instead, the program may read the binary string to identify various command pairings/tuples which define bit-string β. If S operates on inline assembly code or Java source code, then the method may use the appropriate binary or Java byte code parser.

Although illustrated and described herein with reference to certain specific embodiments, the present invention is nevertheless not intended to be limited to the details shown. Rather, various modifications may be made in the details within the scope and range of equivalents of the claims and without departing from the invention.

## Claims

1. A method of marking for authentication a computer program with a bit-string pattern, the method comprising the steps of:
a) generating a bit-string pattern, each bit in the bit-string pattern having a binary value and at least one bit having a first value;
b) searching for at least one polymorphic statement in the computer program;
c) associating the one bit having the first value with the polymorphic statement found in step (b); and
d) altering the polymorphic statement;
wherein altering the polymorphic statement marks the computer program.

2. The method of claim 1 wherein generating the bit-string pattern includes generating multiple bits having first and second values;
associating each of the multiple bits with a polymorphic statement;
modifying a polymorphic statement corresponding to a bit having a first value; and
leaving unmodified a polymorphic statement corresponding to a bit having a second value.

3. The method of claim 1 including the step of:
e) providing a pointer for locating a statement in the computer program; and
searching for the one polymorphic statement in step (b) includes searching for the one polymorphic statement based on the statement located by the pointer.

4. A method of marking, for authentication, source code of a computer program, designated as P, and having a complied version of the computer program, designated as E, the method comprising the steps of:
a) generating a binary bit-string pattern, designated as B, having a predetermined value;
b) modifying P to produce a separate program P1, such that the separate program P1, when compiled, functions identically to P;
wherein modifying P includes one of the following steps:
i) modifying inline assembly code of P based on B; and
ii) manipulating binary executable code of E based on B.

5. The method of claim 4 wherein step (a) generates a binary bit-string pattern having a value not equal to zero.

6. The method of claim 4 wherein step (i) includes correlating a binary bit in B to at least one statement of inline assembly code of P, and
modifying the one statement when the binary bit has a first value.

7. The method of claim 6 wherein the first value of the binary bit is 1.

8. A method of marking for authentication a computer program with a bit-string pattern, the bit-string pattern including a plurality of values, the method comprising the steps of:
a) associating the plurality of values with a respective plurality of predetermined computer statements, in which each predetermined computer statement is expressible as first and second equivalent operations;
b) selecting a first non-processed value of the bit-string pattern;
c) searching the computer program for at least one predetermined computer statement corresponding to the first non-processed value of the bit-string pattern;
d) expressing the predetermined computer statement found in step (c) as one of the first and second equivalent operations;
e) marking the first non-processed value of the bit-string pattern as processed; and
f) repeating steps (b) through (e) for each non-processed value of the bit-string pattern.

9. The method of claim 8 in which step (d) includes altering the predetermined computer statement from the first operation to the second operation, if the first non-processed value of the bit-string pattern is a value of 1.

10. The method of claim 8 including the step of:
generating the bit-string pattern having multiple bits of first and second values and a bit length smaller than or equal to a number of predetermined statements in the computer program.

11. The method of claim 8 including the step of:
g) providing a pointer for locating a predetermined statement in the computer program; and
searching the computer program of step (c) includes searching for the predetermined statement located by the pointer in step (g).

12. A method of authenticating a second computer program against a first computer program, the method comprising the steps of:
a) accessing a bit-string pattern, each bit in the bit-string pattern having a binary value and at least one bit having a first value;
b) searching for at least one polymorphic statement in the second computer program;
c) associating the one bit having the first value with the polymorphic statement found in step (b);
d) altering the polymorphic statement in the second computer program;
e) comparing the polymorphic statement in the second computer program, after altering the polymorphic statement in step (d), against a corresponding polymorphic statement in the first computer program; and
f) determining that the second computer program is a modified version of the first computer program, if the polymorphic statements compared in step (e) are not similar.

13. The method of claim 12 including the steps of:
(g) associating another bit having a second value with another polymorphic statement found in step (b);
(h) comparing the other polymorphic statement of step (g) against a corresponding polymorphic statement in the first computer program; and
(i) determining that the second computer program is a modified version of the first computer program, if the polymorphic statements compared in step (h) are not similar.

14. The method of claim 13 including the step of:
repeating steps (b) through (f) for another bit in the bit-string pattern having a first value.

15. The method of claim 13 including the step of:
repeating steps (g) through (i) for another bit in the bit-string pattern having a second value.

16. A method of authenticating a second computer program against a first computer program, the method comprising the steps of:
a) accessing a first bit-string pattern, each bit in the first bit-string pattern having a binary value associated with a corresponding polymorphic statement in the first computer program;
b) searching for at least one polymorphic statement in the second computer program;
c) assigning a bit having a binary value to the polymorphic statement found in step (b);
d) assigning another bit having a binary value to another polymorphic statement found in step (b);
e) generating a second bit-string pattern including the bits assigned in steps (c) and (d); and
f) determining that the second computer program is a modified version of the first computer program, if the second bit-string pattern does not match the first bit-string pattern.
